# EUROPEAN PATENT APPLICATION

(11) **EP 1 207 450 A2**
(43) Date of publication of application: **22.05.2002**
(21) Application number: 01125642.7
(22) Date of filing: 26.10.2001
(51) Int. Cl.: G06F 3/033

(54) **Display system for industrial automation**

(30) Priority: 27.10.2000 US 243819 P; 21.08.2001 US 935137
(71) Applicant: SIEMENS AKTIENGESELLSCHAFT, 80333 München (DE)
(72) Inventor: Constantine, Larry, 1969 Rowley (US); Fritz, Helmut, 90453 Nuernberg (DE); Noble, Robert James, Glebe, NWS 2037 (AU); Windl, Helmut, 93077 Peisig (DE)

(57) **Abstract**

An industrial automation computer display presents cumulative or sequential messages to the user through an unobtrusive and discreet navigator and with audio-visual feedback. The messages related to fault-causing events are stored, and the last message is displayed in a space-saving manner in the navigator. A complete list of messages appears when the user requests it through a user-activated icon, allowing navigation to, and assessment of, the messages. After selection of an entry and initiation of a "jump" to the fault location, the list disappears and the discreet navigator is once again reduced to the original message indicator, which can also be made to disappear altogether until the next significant event occurs. That is, the user sees the complete list in a pop-up window for only as long as she/he needs to, and thus considerably more working area is made available.

## Description

The present invention relates to the field of industrial automation and, in particular, to a monitoring device in a network system having the capability of displaying event related messages in a discreet navigational window and a method of displaying and using the discreet navigational window for the purposes of accessing the source of messages and resolving problems associated with any fault-causing events, with minimal obstruction of work space on the display monitor.

Modern industrial automation utilizes applications which alert the user of the application to problems that may arise related to a particular sector in an automated line, such as a manufacturing line. An "application" may comprise any number of different steps for accomplishing certain tasks. For example, a computer application may involve a program with which a computer user interacts to perform a task, as distinguished from the familiar application software where a system or other software creates a functional environment in which the application software is designed to run.

Generally speaking, in any application environment, the user interacts, or wants to interact, with the entity(ies) that is (are) to be controlled, commanded, or directed, such as with the program steps in the case of debugging a program, or with a manufacturing line sector in the case of controlling the steps of processing a product through the line. Usually, such an interaction is provided through a monitor with a display. The productivity of the user, that is, the successfully maximized control of the events by the user, depends upon how well the information on that monitor is displayed, and how well the user can interact with the events through the information that is displayed on the monitor. Unfortunately, the present state of the art in this area has been lacking in certain aspects, and therefore needs improvement.

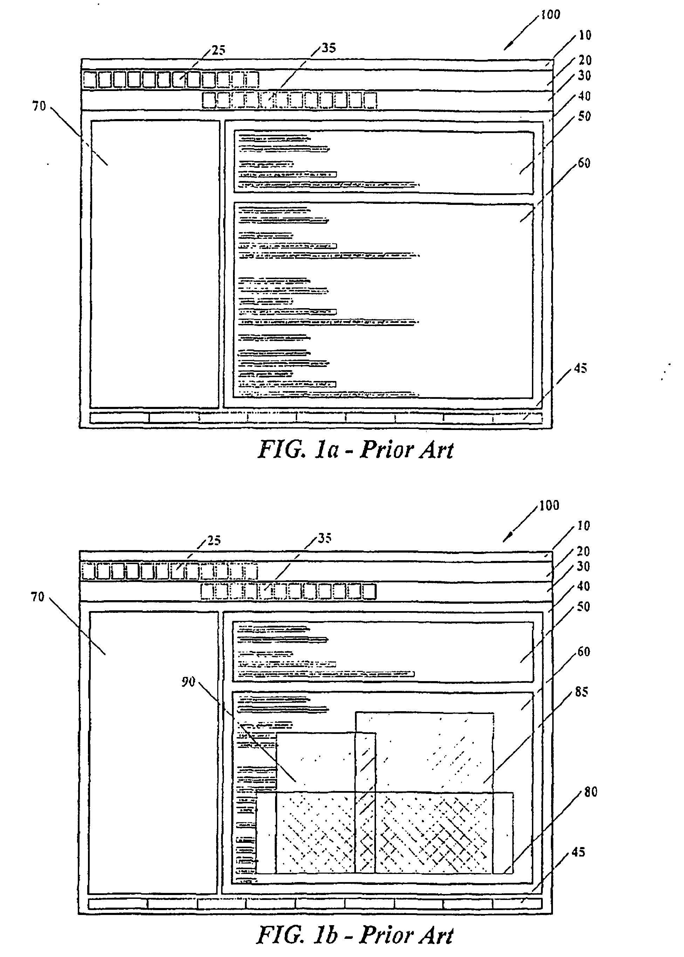

For example, in Fig. 1a, a screen display 100 on a conventional monitor is shown. Usually, such a display is divided into various smaller regions, sometimes called windows, bars, and fields in which icons representing different commands, tools, etc., may be located. Thus, in Fig. 1a, regions 10, 20, 30 and 40 may be referred to as bars, while larger regions 50, 60 and 70 may be referred to as windows, or even as pages or subset of pages. Another favored term for a region such as 70 is a "side-bar". Icons in their respective bars are referenced as 25, 35 and 45 in Fig. 1a. Sometimes, the bar at the top of the display may be a "menu bar" and those at the bottom a "status-bar." As these terms are well known in the art, and for brevity, they will not be described here in any greater detail.

In prior art, regions such as shown in Fig. 1a are programmed to be of a certain size. In some applications, and as is well known in the art, regions other than the "bars" can even be resized by manually pointing with a cursor to an edge of the regions and moving an appearing arrow in the direction desired for resizing the region, or window.

It will be appreciated by those skilled in the art, especially by those in the field of software applications, for example, that the largest work space that is possible on the display is desired when working on the display such as when debugging an application program or monitoring production in a manufacturing line. However, no matter how much the work space, that is regions 50 and/or 60, may have been maximized, in those application programs where a "pop-up" window appears on the display when there is a problem, such a window obscures the work product already on the display, and at the same time, diminishes the work space as shown in Fig. 1b. That is, pop-up windows such as those referenced by numerals 80, 85 and 90 take up a great deal of work space, and block displayed information such as 55 and 65 shown in Fig. 1a.

The present invention is directed to a device and a method for improving the Man/Machine interface (MMI) or Human/Machine Interface (HMI) between a display and the user of the display. Many of the productivity issues of to-day in industrial automation can be easily traced to the effectiveness of such interfaces.

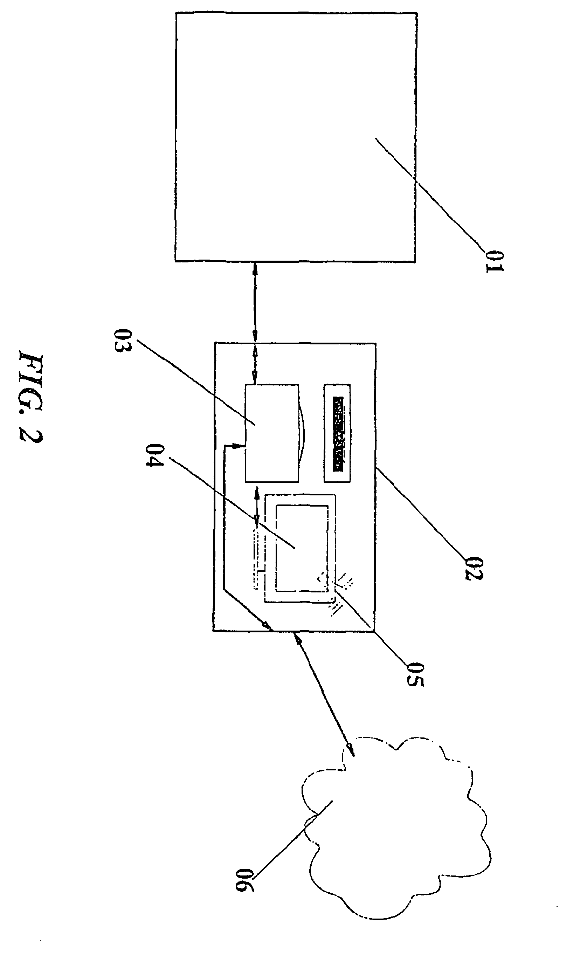

The present invention provides a method of preserving work space on an industrial automation computer display, while at the same time providing a place for pop-up windows. A display device is also provided with an alert to warn the worker with an appropriate signal associated with significant event related messages that must be addressed by the worker, all without encroaching upon the work space. At the same time, the worker is able to "jump" to the location of the event with a quick click at an unobtrusive and discreet navigator indicator on the edge of a display and get on with the problem resolution immediately. Such an industrial automation display arrangement is useful in a control system connected to an industrial equipment cluster in a network environment as depicted in Fig. 2. It will be noted that the control system, referenced by numeral 02 in the same Figure, comprises display 04 which is supported by computer 03 and also has a speaker 05 that is capable of issuing audible warning in the case of a fault-causing event occurring in equipment 01 which is part of network 06.

Also, the present invention addresses at least two of the common problems associated with working with computer monitors, terminals, or, in general, information presenting displays, namely, the work space on the display in which the user must complete his/her tasks and the manner in which the events received by the display are presented to the user. For example, in monitoring the progress on a manufacturing line, or in debugging a program, problems may arise in either case, and those problems are then relayed to a worker through the display. Usually, the messages that report these problems or events are not classified in the order of their importance, nor are they presented to the worker at the display in a well organized and logical manner so as to enable to worker to work in the most productive way. These fault-causing events may not present themselves to the user through the display, nor alert the user to the arrival of such important messages. If inquired after by the user, messages may appear on the screen in such a way as to obscure the work space.

In one embodiment of the present invention, a computer display is provided that is capable of presenting cumulative or sequential messages to the user through an unobtrusive, discreet navigator for running application programs comprising a primary display region, a peripheral display region, a message indicator superimposed over a portion of the peripheral region, and a user-activated icon for causing retrieval and display of an industrial automation system message.

According to the present invention, a computer display is used advantageously by arranging the screen area available on the display in an orderly manner so as to get the most benefit with the least area for each function. Thus, the narrow peripheral region around the outside perimeter of the display is reserved for conventional drop-down menus, such as File, Edit, View, Insert, Format, Print, etc., or any other processing tools which are represented by their well-known icons. The interior primary region, on the other hand, is partitioned into three areas, namely, a side region where a control panel for the particular application program resides, an upper portion where an identifying record of the application is shown, and the larger lower region where an interactive work space is provided for the user.

When an event, for example a fault-causing event occurs, the event/message is relayed to the display through a conventional computer system with a processor, memory, monitor and a key board, which are not described here in detail in order not to obscure the main features of the present invention. The information, in text form, is placed in a unobtrusive and discreet indicator, that is, in a small sliver of space, temporarily superimposed over other existing icons, for example, that may be already programmed to be shown on the frame like peripheral region of the display. Once the user observes the appearing discreet navigator indicator with a message, then he/she assesses what action to take. If an action is required, the user, with a conventional pointing device, clicks on the discreet navigator. This triggers a pop-up window to appear over the interactive work space on the display, but covering only a relatively small area over the work space. The pop-up window contains a list of events related to the significant event which is listed on top for priority. Then the user assesses the fault-causing event, and takes an appropriate action by entering the necessary commands on the workspace, during which the pop-up window retracts from the display. Once the action remedies the problem, the original significant message and the discreet navigator indicator which carried it also disappear from the display, thus relinquishing its temporary place to the normally occupying indicator with its function intact. This is to be compared with many software applications where faults are output in a so-called log windows which show, for example, faults, the cause of the fault, and the fault location, and where the log windows take up a very large amount of space on the display screen, and their size therefore often has to be changed in order to create sufficient space for the actual working area. There is no feedback in these conventional log windows about the new events that have occurred. They show the latest, not necessarily the most significant event, at the top or bottom of the list.

An embodiment of the present invention includes, in addition to an auto-activated discreet navigator, a user-activated icon to retrieve messages on demand, even in the absence of the discreet navigator, and to display the most significant message in the discreet navigator which then appears, or the significant message and all the related messages in the pop-up window which may include a menu.

Another embodiment of the present invention is a method for displaying messages relating to industrial automation applications and providing user-activated inquiry into the messages, and for use in the context of an industrial automation display having a peripheral display region and a primary display region. The method comprises the steps of providing a message indicator, in the peripheral region only, indicating the presence of a message, receiving a signal from the user via the user's activation of the message indicator, and, in response to receiving the signal from the user, retrieving the contents of a message associated with the message indicator and displaying the retrieved message contents in a pop-up window adjacent to the peripheral display region.

The display having a discreet navigator is augmented further with the capability of presenting cumulative or sequential events or messages to the user through an auto-visual feedback. That is, at the same time the signal is received, the information in the text form is placed in the unobtrusive and discreet navigator indicator. Once the user receives the auto-visual signal, then he/she sees the discreet navigator indicator appear, and then assesses what action to take. The user then can turn off the blinking visual indicator that also appears nearby to continue with the work at hand. On the other hand, if the user clicks on the discreet navigator indicator, then the visual indicator is turned off automatically. However, if the discreet navigator indicator is first clicked, then that action prompts the pop-up window to appear over an interactive work space on the display. Then the user accesses the fault-causing event, and takes an appropriate action by entering the necessary commands on the workspace, during which the pop-up window retracts from the display, or closes down. Once the action remedies the problem, the original significant message and the discreet navigator indicator which carried it also disappear from the display, thus relinquishing its temporary place to the normally occupying indicator with its function intact.

In addition, the auto-visual aid is coupled with an auto-aural, or acoustic signal so that the combined audio-visual warning that emanates from the display reinforces the possibility of the message not being missed by the user operator. Thus, as in the case with auto-visual warning summarized above, at the same time the audio-visual signal is received, the information in the text form is placed in the unobtrusive and discreet navigator indicator. Once the user receives the auto-visual signal, then he/she sees the discreet navigator indicator appear, and then assesses what action to take. The user then can turn off the blinking visual indicator as well as the warning sound that also appears nearby to continue with the work at hand. On the other hand, if the user clicks on the discreet navigator indicator, then the audio-visual indicator is turned off automatically. However, if the discreet navigator indicator is first clicked, then that action prompts the pop-up window to appear over an interactive work space on the display. Then the user assesses the fault-causing event, and takes an appropriate action by entering the necessary commands on the workspace, during which the pop-up window retracts from the display. Once the action remedies the problem, the original significant message and the discreet navigator indicator which carried it also disappear from the display, thus relinquishing its temporary place to the normally occupying indicator with its function intact.

The present invention also discloses embodiments of a method of automated navigation for accessing a fault-causing event in a computer display having an audio-visual feedback coupled with either the auto-activated discreet navigator, or the user-activated icon, or a combination thereof. In one embodiment, a method for having the computer display to present a message for the combination is accomplished by providing a message indicator, in the peripheral region only, indicating the presence of a message; receiving a signal from the user via the user's activation of the message indicator; and in response to receiving the signal from the user, retrieving the contents of a message associated with the message indicator and displaying the retrieved message contents in a pop-up window adjacent to the peripheral display region. It will be noted that the messages are related to fault-causing events, and a single message is retrieved if the user's activation comprises a selection lasting a first period of time, and a plurality of messages is retrieved if the user's activation comprises a second period of time, where the first period of time is less than the second period of time. Also, it will be noted that "user's activation" here means the user indicating and intention versus the "user's selection" means actually indicating an icon for a period of time.

In another embodiment, a method for using a user interacting with the disclosed industrial automation display is shown comprising the steps of receiving an industrial automation display comprising a message indicator superimposed on the peripheral display region; activating retrieval of message contents by selecting the message indicator; and receiving the retrieved message contents via a pop-up window, wherein the messages related to the fault-causing event are presented in the order of their occurrence. The messages are associated with respective time tags and in an order based on the time tags. In still another embodiment, a method of user interacting with an industrial automation display comprises the steps of receiving an audio-visual signal, wherein the audio-visual signal comprises an aural sound and a blinking message indicator, and where the blinking message indicator shows a fault-causing message in text form and blinking in a color in contrast to the surrounding environment; the user responding to the signal by viewing and assessing the nature of the'fault-causing message; clicking on the message indicator and causing a pop-up-window to appear over a task area on the display; wherein the pop-up window shows a list of messages related to the fault-causing event, and the user responding to the signal by entering appropriate key-strokes in response to the messages listed in the pop-up window. It will be recalled that the auto-activated discreet navigator is a message indicator that appears unobtrusively superimposed over a portion of the lower edge of said computer display only as triggered by an event/message, and that the user-activated icon retrieves a latest event/message when tapped quickly for a first period of time and retrieves all messages and places them in a pop-up menu when held down for a second period of time longer than the first period of time.

Thus, the events or messages are stored, and the last event or message to occur is displayed in a space-saving manner in a navigator with audio-visual feedback. The complete list of events/messages appears when the user requests it through a user-activated icon, allowing navigation to and assessment of the events. After selection of an entry and initiation of a "jump" to the fault location, the list disappears and the event is once again reduced to the original display of the discreet navigator, which can also be made to disappear altogether until the next significant event occurs. That is, the user sees the complete list in a pop-up window for only as long as she/he needs to, and thus considerably more working area is made available. Other features and key aspects of the present invention will be apparent to those skilled in the art in view of the following description.

Fig. 1a is an industrial automation display showing the various regions on the screen of the display, according to prior art.

Fig. 1b is an industrial automation display showing the obstruction of a work-space when Pop-up-Windows of irregular shapes and sizes are used, according to prior art.

Fig. 2 is a network system showing the connection of an industrial automation display to industrial equipment via a computer in a control system, according to the present invention.

Fig. 3 is a computer display showing the orderly partition of the screen area into functional regions, according to the present invention.

Fig. 4 is an industrial automation display showing the effective use of a peripheral portion of the screen, according to the present invention.

Fig 5 shows the functional names of the indicators used on the lower edge of the computer display of the present invention.

Fig. 6 is a portion of an industrial automation display showing the discreet navigator, user-activated, visual and aural Indicators of the present invention being used on the lower edge of the display, according to the present invention.

Fig. 7 is a portion of an industrial automation display showing the Pop-up-Window and the message list, therein, according to the present invention.

Fig. 8 is a Flow Chart showing the steps of the present invention when Audio-Visual signal is not on, according to the present invention.

Figs. 9a is a Flow Chart showing the steps of the present invention when Audio-Visual signal is on, and where the message is viewed in the discreet navigator indicator only, according to the present invention.

Fig. 9b is a Flow Chart showing the steps of the present invention when Audio-Visual signal is on, where the message is viewed in a Pop-up-Window (PUW), according to the present invention.

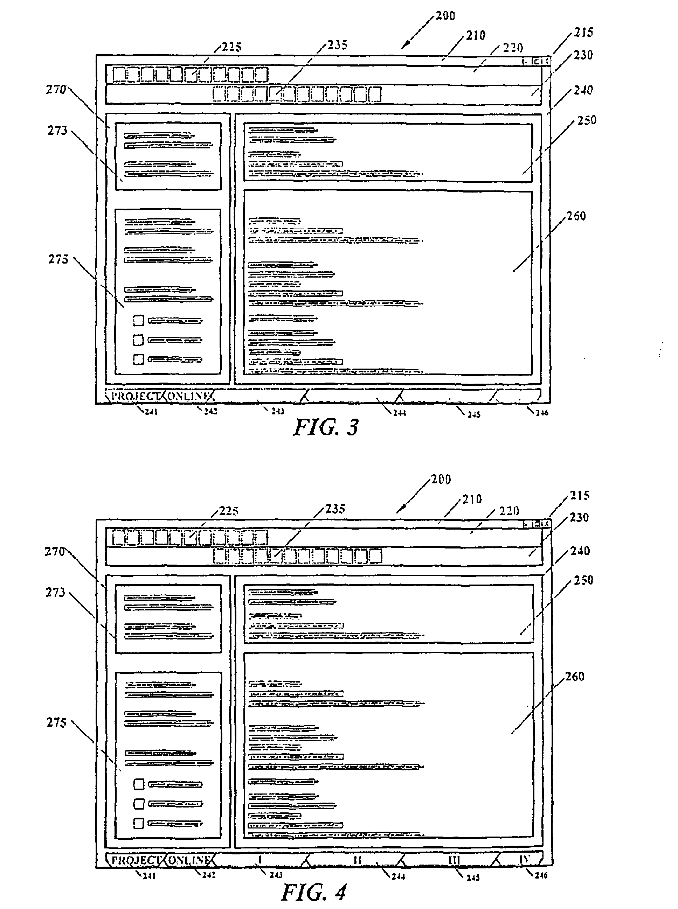

Figs. 3 through 9a-9b show a computer display, capable of presenting cumulative or sequential events or messages to the user through an unobtrusive and discreet navigator and with an audio-visual feedback, and methods for providing and for using the same. It will be better understood with further description below that it is important for the navigator to be unobtrusive and discreetly displayed in the form of a message indicator when a fault-causing event takes place in an industrial equipment that is part of a network, such as depicted in Fig. 2.

In Fig. 3, display 200 is provided with a frame-like and narrow peripheral region of which only the upper edge rows 210, 220, 230 and the lower edge are shown to contain tools 225 and icons 235 that are useful for processing software programs, operating programs, or application programs in general. The lateral edges 240 can also be used for anchoring icons for flying or drop-down menus. At the upper corner, icons 215 are the familiar ones that are used to control the size of the screen, as well the closing and the minimization of the display screen. As these tools are well known in the field, no attempt will be made to describe them here in any detail so as to not obscure the main features and key aspects of the present invention. It will be noted that lateral edges 240 wrap around the bottom edge where indicators 241-246 are located. Here again, although the use of indicators such as indicators or indicator-like separators are common in the art, it is important in the present invention as to how these indicators are used to advantage without any additional space requirements for the separate functions that are described further below.

Preferably, the interior primary region of the industrial automation display shown in Fig. 3 is partitioned into three primary regions, namely, side region, or side bar 270, upper right region 250 and region 260 which provides the largest area for an interactive work-space for the user of the display. The smaller area, region 250, is reserved for identifying the name, and the associated information of the particular program that is running on the system. Side bar 270 is arranged to have a control panel with its subdivisions, such as 273 and 275 as shown in the same Figure. The control panel has tools that are also specific to the application program that is being run on the system. What is meant by the "system" is a conventional computer system comprising a processor, memory, a monitor, key board any other peripheral equipment such as printers, etc. that are necessary to run an application software or program. As these types of systems are known in the field, for brevity, they will not be described here.

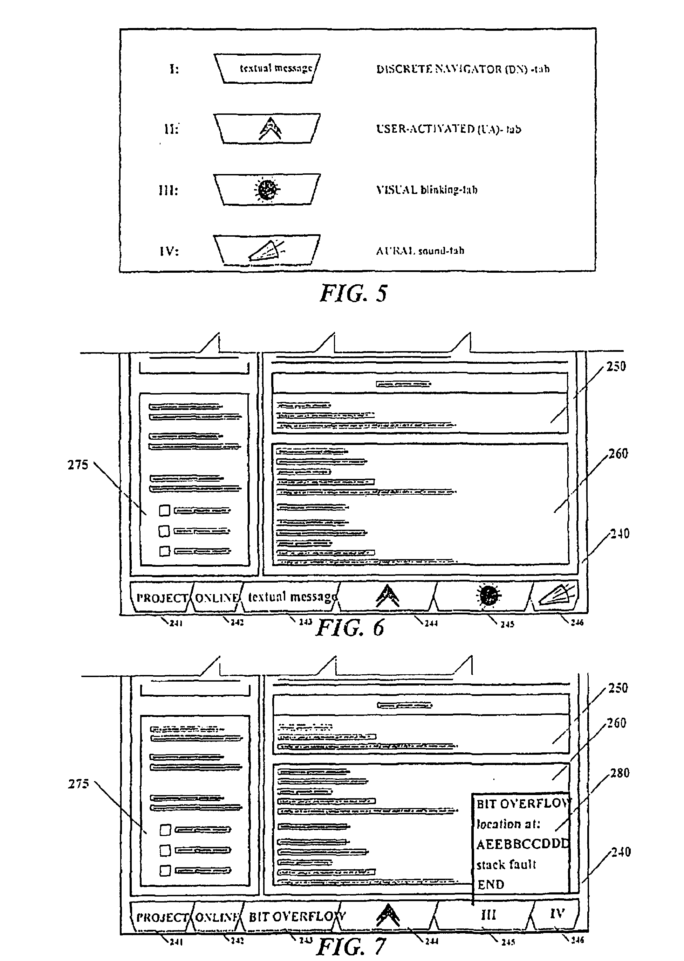

A feature of the present invention is the manner of utilization of the lower edge of the display shown in Fig. 4. Indicator 241 is reserved for displaying the name of the project that is undertaken, while indicator 242 indicates whether the system is online or not. The other indicators, namely, indicators 243-246 are shown to have specific names I, II, III, IV, which are reserved for the functions that are named in Fig. 5. In a key aspect of the present invention, these indicators can have dual functions such that the functions shown in Fig. 5 can be temporarily superimposed over other existing icons with different names and functions. Although any one of the four indicators may have any of the functions shown in Fig. 5, it is preferred that they have the functions as assigned in the Table of Fig. 5. For example, the user-activated (UA) indicator with the chevron symbol is located centrally, because it is the indicator that is most often used to query messages and hence should be readily accessible. The most important message indicator, that is, the discreet navigator (DN) indicator, is immediately next to the UA-indicator. The warning light, preferably red, and the intermittent aural indicator are to one side of the lower edge of the display, but still well within the view of the display users. As it will be more apparent later, the warning light can also be combined with DN-indicator 243.

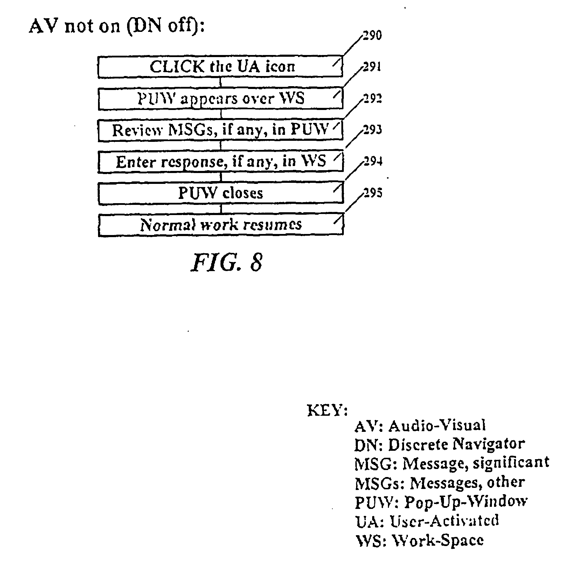

Thus, a significant advantage of the present invention is that during operation -- such as when debugging a software program, or when monitoring the process steps in a manufacturing line -- when a significant event occurs, first an audio-visual warning is displayed automatically. At the same time a textual message or code to that effect is displayed in message indicator 243. If there are other messages, that is, if there are cumulative and sequential messages or events, they are stored and a significant event -- if there is one -- based on a priority coding, or the last event to occur is displayed in a space-saving manner in indicator 243. An exemplary message "BIT OVERFLOW" is shown in Fig. 7. The presentation of events/messages in this manner in message indicator 243 on the lower edge of the display does not obstruct any information that is in the primary region of the display, that is the information is displayed unobtrusively and discreetly. It is also another aspect of the present invention that indicator 243 can now be used as a "navigator" to investigate further the cause of the event or the fault by clicking on the indicator and "jumping" to the location of the fault (hence the term "discreet navigator", or DN). "Clicking" is used here in the conventional sense of pointing and pressing a pointing device associated with a computer.

The discreet navigator can be used in two modes: namely, by a quick click, or tap, on the indicator, which will then take the user to the cause of the single fault, or by dwelling on the indicator for a period of time longer than the previously described tap (time duration adjustable), which will then trigger a pop-up window (PUW) and make visible in it the entire list of events related to the initial event. It should also be noted that the visual or audio-visual signal can be turned off by clicking on indicators 245 and 246, or on a single indicator if the two functions are combined, or it is automatically turned off when the discreet navigator indicator is activated by a click. However, if a new message is received while working with the DN, a new audio-visual sign will be emanating from the display.

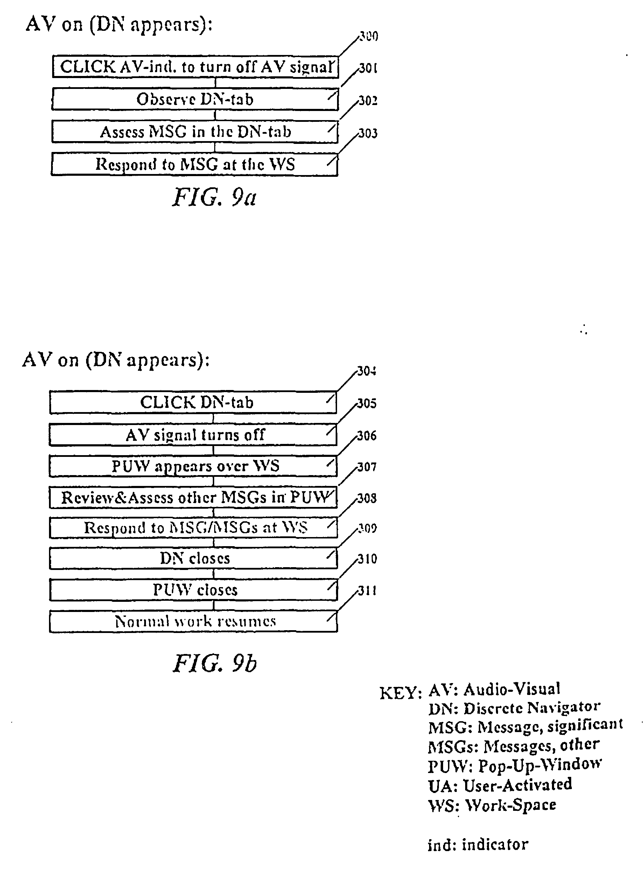

PUW 280 is shown in Fig. 7. PUW is relatively small in comparison with the area provided as work-space (WS) 260. PUW becomes visible if the discreet navigator is pressed for longer than a quick click, and also when the user-activated icon 244 is pressed. Flow charts in Figs. 8, and 9a and 9b show the mode operation when the audio-visual AV signal not on, and on, respectively.

The absence of the AV signal and any textual message in the DN will indicate that there are no current significant events pending. However, there may be other messages. In that case, the following steps are taken as shown in Fig. 8: (also Fig. 7)
- 290:: Click the UA-indicator 244;
- 291:: Pop-up-Window (PUW) 280 becomes visible over Work-Space WS 260;
- 292:: User reviews the messages (MSG)s, if any, in PUW 280;
- 293:: User enters any response, if any, in WS 260;
- 294:: PUW closes
- 295:: Normal work resumes

However, when the AV comes on, the DN appears, for which case the following steps are taken as shown in Fig. 9a: (also Fig. 7)
- 300:: Click the AV-indicators 245, 246 to turn of the AV signal;
- 301:: Observe the message on the DN-indicator 243;
- 302:: Assess the significant, or the last event reported in the DN indicator;
- 303:: Respond to the event/message at the WS 260 -OR, as shown in Fig. 9b: (also Fig. 7)-
- 304:: Click DN-indicator 243
- 305:: AV signal turns off
- 306:: PUW 280 appears over WS 260
- 307:: Review and Assess other messages/events in PUW
- 308:: Respond to significant message or other messages at WS
- 309:: DN closes
- 310:: PUW closes
- 311:: Normal work resumes.

Various aspects of the present invention have been shown and described with reference to particular embodiments of the invention. Persons skilled in the art will recognize that various changes in form and details (for example, the order in which particular method steps are performed) may be made without departing from the spirit and scope of the invention.

## Claims

1. An industrial automation system computer display comprising:
a primary display region;
a peripheral display region;
a message indicator superimposed over a portion of the peripheral region; and
a user-activated icon for causing retrieval and display of an industrial automation system message.

2. The industrial automation system computer display according to claim 1, wherein the peripheral region comprises a top edge, a bottom edge and lateral edges circumscribing an icon for invoking tools for running and debugging application programs.

3. The industrial automation system computer display according to claim 1, wherein the message indicator is located in a status bar.

4. The industrial automation system computer display according to claim 1, wherein the message indicator is displayed superimposed over the peripheral display region when triggered by an automation system message.

5. The industrial automation system computer display according to claim 1, wherein the user-activated icon is displayed approximately in the center of the peripheral region.

6. The industrial automation system computer display according to claim 1, wherein the user-activated icon is located adjacent the bottom edge of the peripheral region.

7. The industrial automation system computer display according to claim 1, wherein the user-activated icon, when selected for a first period of time, invokes retrieval of a single message, and, when selected for a second period of time, invokes retrieval of a plurality of messages.

8. The industrial automation system computer display according to claim 7, wherein the plurality of messages is displayed in a pop-up window.

9. The industrial automation system computer display according to claim 7, wherein the first period of time is less than the second period of time.

10. The industrial automation system computer display according to claim 7, wherein the pop-up window overlays a work area in the primary region.

11. The industrial automation system computer display according to claim 7, wherein the messages in the pop-up window are associated with respective time tags and in an order based on the time tags.

12. The industrial automation system computer display according to claim 1, wherein the message indicator is accompanied by an audio-visual warning comprising an audible sound and a blinking display comprising a color contrasting with the visual characteristics of the surrounding peripheral region.

13. A method for use with an industrial automation display having a peripheral display region and a primary display region, the method for displaying messages relating to industrial automation applications and providing user-activated inquiry into the messages, the method comprising the steps of:
(a) providing a message indicator, in the peripheral region only, indicating the presence of a message;
(b) receiving a signal from the user via the user's activation of the message indicator; and
(c) in response to receiving the signal from the user, retrieving the contents of a message associated with the message indicator and displaying the retrieved message contents in a pop-up window adjacent to the peripheral display region.

14. The method according to claim 12, wherein a single message is retrieved if the user's activation comprises a selection lasting a first period of time, and a plurality of messages is retrieved if the user's activation comprises a second period of time.

15. The method according to claim 13, wherein the first period of time is less than the second period of time.

16. The method according to claim 12, wherein the messages relate to a fault-causing event.

17. A method for permitting a user to interact with an industrial automation display, the display comprising a primary display region and a peripheral display region, the method comprising the steps of:
(a) receiving an industrial automation display comprising a message indicator superimposed on the peripheral display region;
(b) activating retrieval of message contents by selecting the message indicator; and
(c) receiving the retrieved message contents.

18. The method according to claim 16, wherein the message indicator is accompanied by an acoustic signal.

19. The method according to claim 16, wherein the message relates to a fault-causing event.

20. The method according to claim 18, wherein the user responding to the signal comprises viewing and assessing the nature of the fault-causing message.

21. The method according to claim 16, wherein the step of activating retrieval of the message comprises clicking on the message indicator.

22. The method according to claim 16, wherein the retrieved message content is received via a pop-up window.

23. The method according to claim 20, wherein the pop-up window shows a list of messages related to the fault-causing event presented in the order of their occurrence.

24. The method according to claim 16, further comprising the step of entering a response to a message in the pop-up window.
